(19) Europäisches Patentamt
European Patent Office
Office européen des brevets

(11) **EP 3 327 988 A1**

(12) **EUROPEAN PATENT APPLICATION**

(43) Date of publication:
**30.05.2018 Bulletin 2018/22**

(51) Int Cl.:
**H04L 12/18** *(2006.01)*

(21) Application number: **16200154.9**

(22) Date of filing: **23.11.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **ABB Schweiz AG**
**5400 Baden (CH)**

(72) Inventors:
• **PANG, Zhibo**
**722 42 Västerås (SE)**
• **BAG, Gargi**
**723 44 Västerås (SE)**
• **SCHMITT, Johannes**
**68526 Ladenburg (DE)**

(74) Representative: **Jin, Xiao-Hong**
**ABB AB**
**Intellectual Property**
**Forskargränd 7**
**721 78 Västerås (SE)**

(54) **SYSTEM AND METHOD FOR IMPROVING MULTICAST LATENCY AND RELIABILITY OF MULTICAST TRANSMISSIONS IN A WIRELESS BUILDING AUTOMATION NETWORK**

(57) The present invention relates a system and a method for improving multicast latency and reliability of a multicast message in a wireless building automation network comprising a plurality of wireless devices. The method comprising steps of retrieving pairing information of the wireless devices, wherein the pairing information includes a building structure, locations of the devices (S10), identifying a source and a destination devices for any of the paired devices, wherein a multicast transmission is to be made between the source device and the destination device, for each of the identified pair of the source and destination devices (S20), retrieving a network topological structure covering the source device, the destination device and intermedia devices on a unicast path from the source device to the destination device, and N-hop neighbor devices of each of the intermedia devices (S30), structuring a first candidate multicast group (CMG0) including the source device, the destination device and the intermedia devices on the unicast path (S40), structuring a series of candidate multicast groups (CMG1, ..., CMGn) including the source device, the destination device and the intermedia devices on the unicast path, wherein each of the candidate multicast groups (CMG1, ..., CMGn) also includes N-hop neighbors of the intermedia devices, wherein n-hop neighbors of a device are devices that can be reached by said device within n-hops (S50), refining each of the candidate multicast groups by adding or removing a device into or from the group, wherein the refining is based on the building structure, the locations of the devices (S60), evaluating and estimating multicast latency of each of the refined candidate multicast groups (RCMG) to determine a candidate multicast group having a minimal multicast latency (S70), and using the determined candidate multicast group for forwarding the multicast message in operation (S80).

Fig. 1

**Description**

**FIELD OF THE INVENTION**

The present invention relates to a system and method for improving multicast latency and reliability of multicast transmissions in a wireless building automation network. The system comprises a source device, a plurality of intermedia devices and at least one destination device, wherein the source device is capable to send a multicast message/packet and communicate with other devices by unicast transmission, the intermedia devices are capable to communicate with other device with both multicast and unicast transmissions and the destination device is capable to receive a multicast message and send a unicast response.

**BACKGROUND**

In wireless building automation networks, it is often required for an application to deliver a message or packet from one source device to multiple destination devices with short latency. In such a case, multicast is usually expected to have better performance than unicast in terms of latency especially when the number of destination devices is large. However, to achieve the benefits of short latency of multicast, negative effects for example network storm or congestion, must be minimized. Reliable multicast transmission in wireless network faces many challenges. One of the challenges is optimization of a multicast group where intermediate devices or nodes will transmit/forward received multicast messages or packets further until they arrives at the destination devices. On one hand, such a multicast group should not be too big in order not to result in many useless forwarding traffics since they may increase probability of collisions and thus loss of packets. On the other hand, a multicast group should not be too small, otherwise a spatial diversity is reduced and the probability of a "blind zone" (a zone with nodes that are not reachable via multi-hops) will be increased.

US 20140065999 A1 discloses a method and apparatus for efficient and deterministic multicast group that is adjustable based on acknowledgement mechanism. US 20040071128 A1 discloses a method that involves grouping wireless terminals based on distances between an access point and wireless terminals and amplitude of signals output from the terminals. A repeater is selected to retransmit multicast packets from each group. A multicast packet train header indicating characteristics of each packet is created and multicast. The packets are retransmitted in an order in which the repeaters retransmit the packets. US 2014226557 A1 discloses a method that involves storing multicast service information in terminals that are shared with a radio access system. An acknowledgement message is received from the terminals by an identifier that is updated from an associated parameter. Location update information and an associated request message are received from the terminals. A wireless communication unit is controlled by a control unit. The acknowledgement message is transmitted by the wireless communication unit. CN101621747A discloses a method that is able to select multicast group members based on distances and link qualities, wherein distributed multicast servers are configured to register, distribute and maintain the grouping information.

**OBJECTS AND SUMMARY OF THE INVENTION**

An object of the present disclosure is to improving multicast latency and reliability of a multicast message in a wireless building automation network of a Building Automation System comprising a plurality of wireless devices.

In a first aspect of the invention, there is a method provided for improving multicast latency and reliability of a multicast message in a wireless building automation network comprising a plurality of wireless devices. The method comprises steps of

- retrieving pairing information of the wireless devices, wherein the pairing information includes a building structure, locations of the devices,
- identifying a source and a destination devices for any of the paired devices, wherein a multicast transmission is to be made between the source device and the destination device, and for each of the identified pair of the source and destination devices,

    - retrieving a network topological structure covering the source device, the destination device and intermedia devices on a unicast path from the source device to the destination device, and N-hop neighbor devices of each of the intermedia devices,
    - structuring a first candidate multicast group (CMG0) including the source device, the destination device and the intermedia devices on the unicast path,
    - structuring a series of candidate multicast groups (CMG1, ..., CMGn) including the source device, the destination device and the intermedia devices on the unicast path, wherein each of the candidate multicast groups (CMG1, ..., CMGn) also includes N-hop neighbors of the intermedia devices, wherein n-hop neighbors of a device are devices that can be reached by said device within n-hops,
- refining each of the candidate multicast groups by adding or removing a device into or from the group, wherein the refining is based on the building structure, the locations of the devices,

- evaluating and estimating multicast latency of each of the refined candidate multicast groups (RCMG) based on multicast latencies to determine a candidate multicast group having a minimal multicast latency,
- using the determined candidate multicast group for forwarding the multicast message in operation.

One of specific characteristics of BASs is that deployments of building devices are often relatively static. Thus, a lot static information of the building devices may be utilized to achieve more optimal selection of forwarding nodes for multicast, e.g. the pairing information of the sensors and actuators, the location of the devices, the building structure information, the network topology, the historical statistics of performances such as link quality, unicast latency, multicast latency, etc.

By systematically refining the candidate multicast groups based on the building structure and the locations of the devices, and evaluating and estimating multicast patency of each of the refined candidate groups, the invention is able to select a candidate group with an optimal performances in terms of minimal multicast latency and/or reliability for forwarding the message or packet. Thus, the invention enables an improved multicast based communication, which is crucial for an overall system performance, reliability and a user acceptance for wireless building automation systems.

Alternatively multicast performances can be also evaluated and estimated based on successful packet delivery rates of previous multicast messages forwarded by a refined candidate multicast groups so to determine a refined candidate multicast group having a maximum successful delivery rate.

According to one embodiment of the invention, wherein the pairing information includes network performance and the method further comprising refining each of the candidate multicast groups by adding or removing a device into or from the group, wherein the refining is based on the network performance.

According to one embodiment of the invention, the method comprises, for each of the refined candidate multicast groups, evaluating and estimating its multicast performance regularly or occasionally and adjusting a size of the refined candidate multicast group based on the evaluated multicast performance.

According to one embodiment of the invention, the method further comprises adjusting the size of the refined candidate multicast group by adding a device into the group when the multicast performance is lower than a lower threshold or adjusting the size of the refined candidate multicast group by removing a device from the group when the multicast performance is higher than an upper threshold.

In a second aspect of the invention, there is a system comprising a plurality wireless building automation devices and a central network management unit, and the central network management unit is configured to perform the above method. In practice, the steps of the present method may be executed by a system access point that exists in most of BASs. Alternatively, such steps may be executed/performed by a source device.

A further advantage is that the present invention does not rely on acknowledgment mechanisms to adjust multicast groups, thus it will not results in collisions due to the broadcast nature of multicast in wireless networks, especially in multi-hop networks.

## BRIEF DESCRIPTION OF THE DRAWINGS

The invention will now be explained more closely by the description of different embodiments of the invention and with reference to the appended figures.

Fig. 1    illustrates a main flowchart according to one example of the invention;

Fig. 2    shows a schematic view of a series of Candidate Multicast Groups before refining according to one example of the invention;

Fig.3    illustrates an example of estimating a multicast latency between a source device and a destination device;

## DETAILED DESCRIPTION OF PREFERRED EMBODIMENTS OF THE INVENTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art.

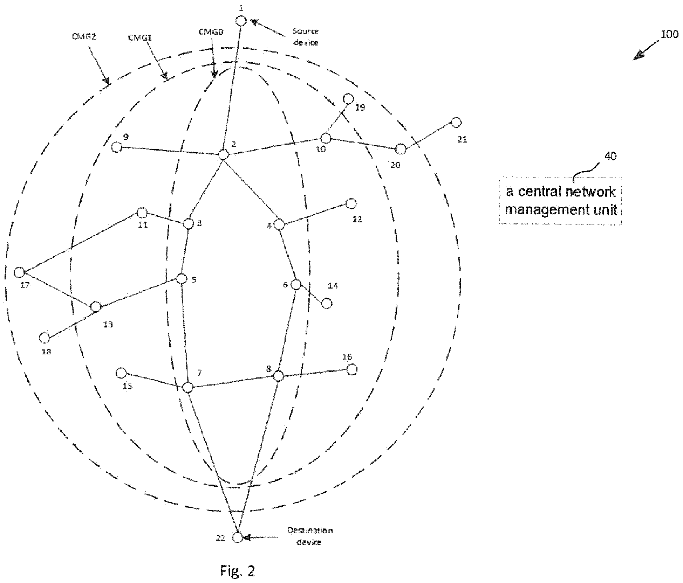

Figure 2 shows a system schematic view, wherein a Building Automation System 100 comprises a plurality of devices and optionally a central network management unit 40. In example, a source device 1 is about to send a message to a destination device 22 by multicast transmissions via a number of intermediate devices. In this example, all of the devices are represented as network nodes.

Each of the devices are able to communicate with others by unicast and/or multicast transmissions. Concretely, the source device 1 is able to send multicast packets to all destination devices, in this example represented by device 22, and to send or receive unicast packets to or from all destination devices. The destination device 22 is able to receive and respond on multicast and unicast packets from the source device 1. The intermediate devices, for example 2-11 in this example, are able to receive and forward multicast and unicast packets to the destination device 22. Furthermore, all of the devices 1-22 are able to exchange network related information to accomplish the measurement and estimation of network performances. Such information may be at least a part of the flowing: link quality, unicast latency and successful packet delivery rate, multicast latency and successful packet delivery rate, etc. They may exchange the information by unicast communications.

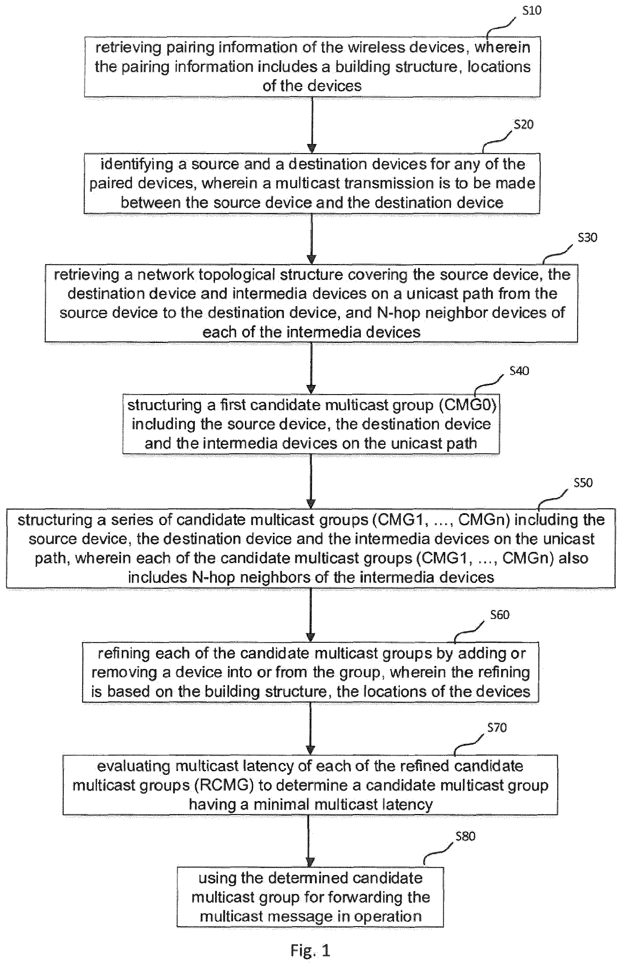

In reference to Figure 1, when a message or a packet is to be sent from the source device 1 to the destination device 22, Pairing information of the wireless devices including the source device S is retrieved, step S10. The pairing information includes also a building structure, locations of the devices. The building structure may be, for example floor plan of the building, material of walls and floors etc. The location of a device provides where for example in which room at which floor, the devices is installed. The destination device 22 that are paired with the source device 1 is identified, step S20.

For each of the identified pair of the source and destination devices 1 and 22, a network topological structure covering the source device, the destination device and intermedia devices on a unicast path from the source device 1 to the destination device 22, and n-hop neighbor devices of each of the intermedia devices is retrieved, step S30. The n-hop neighbors are the devices that can be reached by the said device within n-hops. Thus, 1-hop means that there is a direct connection between a source device and a destination device that thus can be reached without an intermedia forwarding; while 2-hop means that there is one intermediate device in between and so on. Based on the retrieved the network topological structure, a first candidate multicast group (CMG0) including the source device, the destination device and the intermedia devices on the unicast path and a series of candidate multicast groups (CMG1, ..., CMGn) including the source device, the destination device and the intermedia devices on the unicast path are structured, step S40 and S50. In different with the first candidate multicast group, each of the candidate multicast groups CMG1, ..., CMGn also includes N-hop neighbors of the intermedia devices. Figure 2 shows a schematic view of a series of Candidate Multicast Groups CMG0, CMG1, CMG2.

As shown in Figure 2, CMG0 comprises devices represented by nodes 2-8, which are on the unicast routes between the sources device, i.e. node 1 and the destination device, i.e. node 22. CMG0 is a relatively small group of devices. CMG1 comprises devices representing by nodes 2 -16, which includes the devices in CMG0 and the devices which are reachable by the devices in CMG0 within 1 hop. CMG1 is relatively bigger than CMG0. CMG2 comprises devices represented by nodes 2-20, which includes the devices in CMG1 and the devices which are reachable by the devices in CMG1 within 1 hop. CMG2 is the largest in this example.

Based on the building structure, the locations of the devices, each of the candidate multicast groups CMG0, CMG1, CMG2, ..., CMGn is refined by adding or removing a device into or from the group, step S60. For example, in Figure 2, the RCMG0 can be the same as CMG0, the RCMG1 may be reduced to nodes 2-15 by removing node 16 from the CMG1, and the RCMG2 may be increased to nodes 2-21 by adding node 21 to the CMG2.

Furthermore, a multicast latency of each of the refined candidate multicast groups (RCMG) is evaluated and estimated so to determine a candidate multicast group having a minimal multicast latency, step S70. For example, in Figure 2, the RCMG1 may be selected based on this criteria.

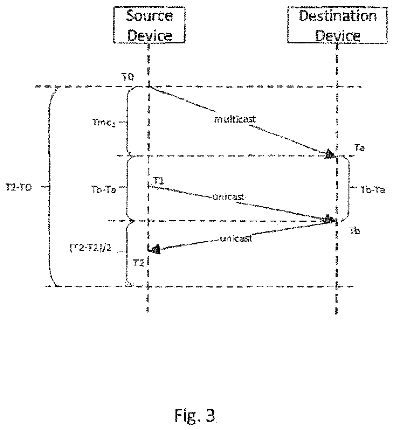

There are different ways to estimate a multicast latency Tmc. For example, it may be calculated as follows (also illustrated in Figure 3),

$$Tmc = (T2 - T0) - (Tb - Ta) - \frac{(T2 - T1)}{2} \qquad (1)$$

wherein, T0 is a time point at which a multicast message is sent out to a destination device; T1 is a time point at which a unicast message to the destination device; T2 is a time point at which a unicast response from the destination device is received; Tb-Ta is a time period between a time point Ta when the multicast message is received and a time point Tb when the unicast message is received by the destination device, wherein T0, T1 and T2 are recorded by the source device based on a local system clock of the source device and Ta and Tb are recorded by the destination device based on a local system clock of the destination device.

This determined candidate multicast group will be selected for forwarding the multicast message in operation, step S80.

Alternatively, multicast performances can be also evaluated and estimated based on successful packet delivery rates of multicast messages forwarded by a refined candidate multicast groups so to determine a refined candidate multicast group having a maximum successful delivery rate. Herein the successful packet delivery rate is a ratio between successful delivered packets/messages and a total delivered packets/messages.

Furthermore, the pairing information may further include network performance and the method further comprising refining each of the candidate multicast groups by adding or removing a device into or from the group, wherein the refining is based on the network performance. Other factors of network performance, for example signal qualities of the connections between the devices and latency of each unicast paths, may be also used as a basis to evaluate and estimate the multicast performance alone or in combination with multicast latency and/or successful delivery rate.

In the technical area of wireless communications, there are many well-recognized metrics for estimating network performance in relation to multicast and unicast performances, for example, the round trip time (RTT) and packet delivery rate (PDR) of unicast, and the time for complete coverage (TCC) and packet delivery rate (PDR) of multicast.

During operation, the multicast performance of each of the refined candidate multicast groups may be regularly or occasionally monitored and then re-evaluated/estimated. Based on the result of the re-estimation, the size of each of the refined candidate multicast groups is adjusted, which may be done by either adding a device into the group when the multicast performance is lower than a lower threshold or removing a device from the group when the multicast performance is higher than an upper threshold.

A further advantage of the present invention is that it is compatible with established standards like ZigBee, 6LoWPAN, Thread, WiFi, multi-hop PLC, LAN, etc., which are underlying network technologies for BASs.

Yet a further advantage of the present invention is that it doesn't noticeably increase the hardware and software cost of end devices due to a fact that information of network performances e.g. the link quality and topology are already available. Although it is preferable to use a more powerful device like the central network management unit 40; however it is possible to use a source device or any other devices that has/have an enough powerful CPU and memory. In case that there is a system access point in the BAS, the central network management unit 40 may be integrated into the system access point.

The present invention is simple to be implemented into low cost devices without requiring powerful computing capabilities. Almost any of mainstream chip-sets has sufficient resources like hardware timers and CPU speed to run an algorithm based on the invention. Furthermore, the present invention may include computer program products installed or equipped on the building automation wireless devices, which are non-transitory storage medium or computer readable medium (media) having instructions stored thereon/in which when executed by a processor performs the method of the present invention. Examples of the storage medium may include, but is not limited to, any type of disk including floppy disks, optical discs, DVD, CD-ROMs, microdrive, and magneto-optical disks, ROMs, RAMs, EPROMs, EEPROMs, DRAMs, VRAMs, flash memory devices, magnetic or optical cards, nanosystems (including molecular memory ICs), or any type of media or device suitable for storing instructions and/or data.

**Claims**

1. A method for improving multicast latency and reliability of a multicast message in a wireless building automation network comprising a plurality of wireless devices, the method comprising steps of

   - retrieving pairing information of the wireless devices, wherein the pairing information includes a building structure, locations of the devices (S10),
   - identifying a source and a destination devices for any of the paired devices, wherein a multicast transmission is to be made between the source device and the destination device, for each of the identified pair of the source and destination devices (S20),

      - retrieving a network topological structure covering the source device, the destination device and intermedia devices on a unicast path from the source device to the destination device, and N-hop neighbor devices of each of the intermedia devices (S30),
      - structuring a first candidate multicast group (CMG0) including the source device, the destination device and the intermedia devices on the unicast path (S40),
      - structuring a series of candidate multicast groups (CMG1, ..., CMGn) including the source device, the destination device and the intermedia devices on the unicast path, wherein each of the candidate multicast groups (CMG1, ..., CMGn) also includes N-hop neighbors of the intermedia devices, wherein n-hop neighbors of a device are devices that can be reached by said device within n-hops (S50),
      - refining each of the candidate multicast groups by adding or removing a device into or from the group, wherein the refining is based on the building structure, the locations of the devices (S60),

- evaluating and estimating multicast latency of each of the refined candidate multicast groups (RCMG) to determine a candidate multicast group having a minimal multicast latency (S70), and
- using the determined candidate multicast group for forwarding the multicast message in operation (S80).

2. Method according to claim 1, wherein the pairing information includes network performance and the method further comprising refining each of the candidate multicast groups by adding or removing a device into or from the group, wherein the refining is based on the network performance.

3. Method according to claim 1 further comprising, for each of the refined candidate multicast groups, evaluating multicast successful delivery rate based on successful delivery rates of previous multicast messages forwarded by the group to determine a refined candidate multicast group having a maximum successful delivery rate.

4. Method according to claim 1 further comprising, for each of the refined candidate multicast groups, evaluating and estimating its multicast performance regularly or occasionally and adjusting a size of the refined candidate multicast group based on the evaluated multicast performance.

5. Method according to claim 4 further comprising adjusting the size of the refined candidate multicast group by adding a device into the group when the multicast performance is lower than a lower threshold.

6. Method according to claim 4 further comprising adjusting the size of the refined candidate multicast group by removing a device from the group when the multicast performance is higher than an upper threshold.

7. A system for of a wireless building automation network comprising a plurality wireless devices (1-22) and a central network management unit (40), **characterized in that** the central network management unit (40) is configured to perform the method according claims 1-6.

8. System according to claim 7, wherein a source wireless device (1) is configured to send a multicast message to a destination wireless device (22) and the source wireless device (1) is configured to perform the method according claims 1-6.

S10

retrieving pairing information of the wireless devices, wherein the pairing information includes a building structure, locations of the devices

S20

identifying a source and a destination devices for any of the paired devices, wherein a multicast transmission is to be made between the source device and the destination device

S30

retrieving a network topological structure covering the source device, the destination device and intermedia devices on a unicast path from the source device to the destination device, and N-hop neighbor devices of each of the intermedia devices

S40

structuring a first candidate multicast group (CMG0) including the source device, the destination device and the intermedia devices on the unicast path

S50

structuring a series of candidate multicast groups (CMG1, ..., CMGn) including the source device, the destination device and the intermedia devices on the unicast path, wherein each of the candidate multicast groups (CMG1, ..., CMGn) also includes N-hop neighbors of the intermedia devices

S60

refining each of the candidate multicast groups by adding or removing a device into or from the group, wherein the refining is based on the building structure, the locations of the devices

S70

evaluating multicast latency of each of the refined candidate multicast groups (RCMG) to determine a candidate multicast group having a minimal multicast latency

S80

using the determined candidate multicast group for forwarding the multicast message in operation

Fig. 1

Fig. 2

Fig. 3

Europäisches
Patentamt

European
Patent Office

Office européen
des brevets

# EUROPEAN SEARCH REPORT

Application Number

EP 16 20 0154

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/124807 A1 (MARTIN TIMOTHY [US] ET AL) 7 May 2015 (2015-05-07) | 1,7 | INV. H04L12/18 |
| Y | * page 1, paragraph 1 - page 19, paragraph 146 * | 2-6,8 | |
| X | US 8 958 286 B1 (ATLAS ALIA [US] ET AL) 17 February 2015 (2015-02-17) | 1,7 | |
| Y | * column 1, line 6 - column 58, line 8 * | 2-6,8 | |
| A | EP 0 800 329 A2 (LUCENT TECHNOLOGIES INC [US]) 8 October 1997 (1997-10-08) * column 1, line 5 - column 19, line 22 * | 1-8 | |
| A | US 8 250 426 B2 (LARSSON PETER [SE]) 21 August 2012 (2012-08-21) * column 1, line 11 - column 18, line 64 * | 1-8 | |
| A | US 2016/277201 A1 (THUBERT PASCAL [FR] ET AL) 22 September 2016 (2016-09-22) * page 1, paragraph 1 - page 8, paragraph 75 * | 1-8 | |

TECHNICAL FIELDS SEARCHED (IPC)

H04L

The present search report has been drawn up for all claims

| Place of search | Date of completion of the search | Examiner |
|---|---|---|
| Munich | 12 May 2017 | Oteo Mayayo, Carlota |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 20 0154

This annex lists the patent family members relating to the patent documents cited in the above-mentioned European search report.
The members are as contained in the European Patent Office EDP file on
The European Patent Office is in no way liable for these particulars which are merely given for the purpose of information.

12-05-2017

| Patent document cited in search report | | Publication date | Patent family member(s) | | Publication date |
|---|---|---|---|---|---|
| US 2015124807 | A1 | 07-05-2015 | NONE | | |
| US 8958286 | B1 | 17-02-2015 | NONE | | |
| EP 0800329 | A2 | 08-10-1997 | CA | 2198308 A1 | 05-10-1997 |
| | | | DE | 69734258 T2 | 29-06-2006 |
| | | | EP | 0800329 A2 | 08-10-1997 |
| | | | JP | 3319972 B2 | 03-09-2002 |
| | | | JP | H1032594 A | 03-02-1998 |
| | | | TW | 327710 B | 01-03-1998 |
| | | | US | 5831975 A | 03-11-1998 |
| US 8250426 | B2 | 21-08-2012 | CN | 101548498 A | 30-09-2009 |
| | | | DK | 2098005 T3 | 02-09-2013 |
| | | | EP | 2098005 A1 | 09-09-2009 |
| | | | PT | 2098005 E | 02-09-2013 |
| | | | US | 2010146357 A1 | 10-06-2010 |
| | | | US | 2012284581 A1 | 08-11-2012 |
| | | | WO | 2008066421 A1 | 05-06-2008 |
| US 2016277201 | A1 | 22-09-2016 | US | 2016277201 A1 | 22-09-2016 |
| | | | WO | 2016148940 A1 | 22-09-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20140065999 A1
- US 20040071128 A1
- US 2014226557 A1
- CN 101621747 A